# EUROPÄISCHE PATENTSCHRIFT

(11) **EP 1 027 836 B1**
(45) Veröffentlichungstag und Bekanntmachung des Hinweises auf die Patenterteilung: **19.07.2006**
(21) Anmeldenummer: 00102747.3
(22) Anmeldetag: 10.02.2000
(51) Int. Cl.: A23N 17/00

(54) **Verfahren und Vorrichtung zur Herstellung von Zwischenprodukten und Mischfutterprodukten für Tiere**
Process and device for producing intermediate products and mixed fodder for animals
Méthode et installation pour fabriquer des produits intermédiaires et des fourrages mixtes pour animaux

(30) Priorität: 11.02.1999 DE 19905675; 25.03.1999 DE 19913514
(43) Veröffentlichungstag der Anmeldung: 16.08.2000
(73) Patentinhaber: deuka Deutsche Tiernahrung GmbH & Co. KG, 40221 Düsseldorf (DE)
(72) Erfinder: Schulz, Walter, 57271 Hilchenbach (DE); Heidenreich, Eberhard, Prof. Dr.-Ing., 48518 Gifhorn (DE); Michaelsen, Thomas, Dipl.-Ing., 38302 Wolfenbüttel (DE)
(74) Vertreter: Stenger, Watzke & Ring

(56) Entgegenhaltungen:
- EP-A- 0 888 860
- DE-U- 9 208 904
- DE-U- 29 808 392
- US-A- 3 458 321
- US-A- 4 981 711
- US-A- 5 622 744
- US-A- 5 714 187
- US-A- 5 783 240

## Beschreibung

Die Erfindung betrifft ein Verfahren zur Herstellung von Zwischenprodukten und Mischfutterfertigprodukten für Tiere mittels einer mindestens eine zum Transportieren, intensiven Scheren, Erwärmen, Stoffwandeln und Verdichten von Ausgangsstoffen dienenden Schnecke aufweisenden Maschine. Weiterhin betrifft die Erfindung eine Vorrichtung zur Durchführung dieses Verfahrens.

Die Herstellung von Zwischenprodukten und Mischfutterfertigprodukten für Tiere, insbesondere in der Form von Futtermittel-Pellets oder Futtermittelgranulat, erfolgt in der Praxis üblicherweise unter Verwendung von Pelletieranlagen, einschneckigen oder zweischneckigen Extrudern oder Expandern. Die Herstellung von Zwischenprodukten und Mischfutterfertigprodukten mittels eines Extruders erfolgt derart, daß dem Extruder mittels Sattdampf vorkonditionierte feingemahlene und gemischte Ausgangsstoffe zugeführt werden. Die Geometrie der Extruderschnecke, d. h. die Steigung der Schneckenwindung entlang der Extruderwelle ist beim Extruder so ausgelegt, daß die Schnecke zunächst zum Fördern der dem Extruder zugeführten Ausgangsstoffe hin zu einer Ausgangsdüse der Maschine dient. Aufgrund der Drosselwirkung der Ausgangsdüse wird durch die Förderung der Stoffe über die Extruderschnecke innerhalb des Extruders ein Druck gegen diesen durch die Düse gebildeten Ausgangswiderstand aufgebaut. Die mittels Sattdampf vorkonditionierten Ausgangsstoffe werden durch die Bewegung der Schnecke intensiv geschert und durch die eintretende Temperatur- und Druckerhöhung infolge Energiedissipation zeitlich begrenzt so beansprucht, daß physikalische und chemische Stoffwandlungen erfolgen können. Das als Strang aus der Düse austretende Produkt kann anschließend nach dem Austritt aus der Düse des Extruders mittels einer Schneidvorrichtung zu der Düsengeometrie entsprechenden Pellets abgetrennt werden. Dieses Verfahren hat den Nachteil, daß zur Herstellung der Futtermittel-Pellets es notwendig ist, daß die Ausgangsstoffe eine relativ hohe Feinheit aufweisen müssen, und daß Wasser zugesetzt werden muß, um die für die Weiterverarbeitung erforderlichen Fleißeigenschaften zu sichern. Da der Höchstwert für die Feuchtigkeit von Futter bei maximal 14 % liegt, um seine gute Lagerfähigkeit ohne die Gefahr von Qualitätsminderungen zu gewährleisten, ist es bei den aus der Praxis bekannten Verfahren zur Herstellung von Zwischenprodukten und Mischfutterfertigprodukten für Tiere mittels Extrudern notwendig, die solchermaßen hergestellten Futtermittel nach der Extrusion zu trocknen. Dieses nachträgliche Trocknen des als Massenware hergestellten Futtermittels ist sehr energie- und zeitaufwendig und somit teuer. Darüber hinaus weisen mittels des Extrusionsverfahrens hergestellte Futtermittel-Pellets den Nachteil auf, daß sie wegen ihrer beim Extruderaustritt stattfindenden Expansion eine hohe Porosität und somit geringe Dichte aufweisen, so daß beim Transport und Lagern große Volumina benötigt werden.

Die Herstellung von Zwischenprodukten und Mischfutterfertigprodukten für Tiere mittels eines Expanders erfolgt partiell in ähnlicher Weise wie die Herstellung in einem Extruder. Ein Expander unterscheidet sich von einem Extruder dadurch, daß am Austritt aus dem Expander keine geometrisch definierte Formgebung für das Produkt erfolgt, d.h., daß der Produktaustritt nicht durch Formgebungsdüsen realisiert wird, sondern üblicherweise durch einen Ringspalt, der von einem in das Expandergehäuse einschiebbaren zentrischen Konus und dem Gehäuse gebildet wird, und eine durch die Größe des Ringspaltes veränderbare Drosselung des Produktstromes im Inneren des Expanders verursacht. Desweiteren werden Expander nur als Einwellenmaschinen mit im Vergleich zu Extrudern einfachen, üblicherweise nicht veränderbaren Schneckengeometrien ausgeführt, die wiederum die mittels Sattdampf vorkonditionierten Ausgangsstoffe innerhalb der Maschine im Bereich des Austritts einer starken Scherbeanspruchung unterwerfen, die zu einer Stoffwandlung der Ausgangsstoffe führt. Aufgrund der Scherbeanspruchung der Ausgangsstoffe wird die über die Expanderwelle eingebrachte mechanische Energie in Wärme umgewandelt, so daß je nach Energieeintrag und Stoffdurchsatz eine signifikante Temperaturerhöhung stattfindet, die zur physikalischen und/oder chemischen Wandlung der Stoffe beiträgt. Diese solchermaßen erwärmten und beanspruchten Stoffe werden nun über die Expanderwelle gegen den Ausgangswiderstand gefördert und verdichtet, so daß im Expandergehäuse ein hoher Innendruck entsteht. Beim Austritt aus dem Ringspalt der Maschine expandieren die komprimierten Stoffe schlagartig von diesem Innendruck auf Umgebungsdruck, wobei gleichzeitig die Produkttemperatur sinkt und ein Teil der im Produkt enthaltenen Feuchtigkeit verdampft, so daß in Verbindung mit der im Vergleich zum Extrudieren geringeren Feuchtigkeitszufuhr beim Konditionieren üblicherweise mit dem Expandieren eine Produktfeuchtigkeit von kleiner 15 % erhalten wird. Dann ist ein anschließendes Trocknen nicht erforderlich, da der im abschließend notwendigen Kühlprozeß vollzogene Stoffaustausch dann zu Endproduktfeuchtigkeiten kleiner 13 % führt. Die starke Expansion der Produkte hat jedoch den Nachteil, daß diese solchermaßen hergestellten Zwischenprodukte und Mischfutterfertigprodukte für Tiere eine reduzierte Schüttdichte aufweisen, d. h., daß die Masse pro Volumen dieser Produkte geringer als jene für die Ausgangsstoffe ist. Da Transportkosten einen hohen Kostenanteil in der Futtermittelindustrie haben, sind geringe Schüttdichten ein Kostennachteil.

Der DE 196 49 309 A1 kann ein Verfahren entnommen werden, bei dem Getreideschrot mit Zuschlagstoffen in einem Mischer gemischt wird und die Mischung in einen Expansionsextruder gegeben wird. Dieser fördert die Mischung über sich axial und/oder radial erweiternde Schneckengänge in Richtung eines Düsenstocks mit einer oder mehreren Düsenöffnungen. Aus den Düsenöffnungen tritt strangartig das Produkt in Schaumform aus, und das Extrudat wird durch ein taktgesteuertes Schneidwerk abgelängt.

Ein weiteres Verfahren und eine Vorrichtung zum Herstellen von Tierfutter wird in der DE 36 03 279 A1 beschrieben. Hierbei wird aus Gründen der Kostenersparnis das Verfahren vom Einbringen der Ausgangsstoffe bis zum Entnehmen des fertigen Produktes in einer mit einem durchgehenden Produktionsstrang versehenen Vorrichtung durchgeführt. Diese Vorrichtung beinhaltet auch einen Extruder, in dem der entsprechende Schritt des gesamten Produktionsverfahren durchgeführt wird. Dieser Extruder beinhaltet mehrere Abschnitte, sodaß die Extruderschnecke die im Extruder befindlichen Materialien in verschiedenen Streckenabschnitten gegen jeweils in dem Abschnitt ausgebildete Einengungen fördert, die von Druckringen gebildet werden.

Eine Vorrichtung zur Behandlung von Futtermitteln ist aus der DE 296 06 769 U1 bekannt. Diese Vorrichtung umfaßt einen Expander, bei dem innerhalb eines Gehäuses eine drehbar angetriebene Schnecke angeordnet ist. In einem Abschnitt des Gehäuses wird in dieses Dampf eingeleitet, der einen Überdruck erzeugen soll. Zur Verhinderung des Entweichens des Dampfes in Richtung Materialeinlaß sind zwei konusförmige Elemente, in das Gehäuse eingebracht die sich in Strömungsrichtung so vergrößern, daß nur noch ein Ringspalt mit der Innenwandung des Gehäuses übrig bleibt. Diese konusförmigen Elemente begrenzen einen Abschnitt der Vorrichtung.

Die US-A-3,458,321 beschreibt ein Verfahren zum kontinuierlichen Mischen, Kochen und Extrudieren von Nahrungsmittelprodukten, bei dem Ausgangsstoffe hohen Druck- und Scherkräften ausgesetzt werden, um auf diese Weise die Temperatur der Ausgangsstoffe zu erhöhen und diese zu kochen. Die Druckkräfte werden anschließend entspannt, um die in den gekochten Ausgangsstoffen enthaltene Feuchtigkeit freizusetzen und abzuführen. Das abgekühlte und teilweise getrocknete Produkt wird daraufhin extrudiert.

Die US-A-5,783,240 offenbart ein Verfahren zur Herstellung von Mischfutterfertigprodukten für Tiere unter Verwendung eines Extruders/Expanders.

Ausgehend von diesem Stand der Technik liegt der Erfindung die **Aufgabe** zugrunde, ein Verfahren zur Herstellung von Zwischenprodukten und Mischfutterfertigprodukten für Tiere der eingangs genannten Art bereitzustellen, mit dem unter Vermeidung der aus dem Stand der Technik bekannten Nachteile Zwischenprodukte und Mischfutterfertigprodukte für Tiere herstellbar sind, die einerseits eine ausreichend hohe Schüttdichte aufweisen und darüber hinaus keiner nachträglichen Trocknung bedürfen. Weiterhin liegt der Erfindung die Aufgabe zugrunde, eine Vorrichtung zur Durchführung dieses Verfahrens bereitzustellen.

Die verfahrensmäßige **Lösung** dieser Aufgabenstellung ist erfindungsgemäß gekennzeichnet durch die Verfahrensschritte:
a) Aufgeben der mittels Sattdampf vorkonditionierten Ausgangsstoffe und deren Förderung in einem ersten Maschinenabschnitt,
b) physikalische und/oder chemische Stoffwandlung der Ausgangsstoffe aufgrund der Scherbeanspruchung, Energiedissipation und Verdichtung in einem zweiten Maschinenabschnitt, wobei die physikalische und/oder chemische Stoffwandlung der Ausgangsstoffe durch Änderung eines freien Strömungsquerschnitts in einem Bereich des zweiten Maschinenabschnitts variabel ist,
c) Entspannen der im Verfahrensschritt b) bearbeiteten Stoffe bei gleichzeitigem Abführen von Gasen und/oder Dämpfen aus der Maschine in einem dritten Maschinenabschnitt,
d) Fördern und erneutes Verdichten der in den vorhergehenden Verfahrensschritten bearbeiteten Stoffe gegen einen Ausgangswiderstand in einem dem Verfahrensschritt c) nachfolgenden Maschinenabschnitt und
e) Abkühlen der hinter dem Ausgangswiderstand aus der Maschine austretenden Produkte.

Mit diesem erfindungsgemäßen Verfahren ist es erstmalig möglich, in einem einzigen Arbeitsverfahren in einem oder in getrennten Maschinengehäusen die Arbeitsweisen eines Extruders und eines Expanders zu kombinieren, ohne gleichzeitig die Nachteile in Kauf zu nehmen, die die beiden Verfahren als Einzelprozesse aufweisen. Insbesondere durch einen Wechsel der Schneckengeometrie über die Länge der Schnecke und Veränderungen der Gehäusegeometrie ist es möglich das Verfahren so zu steuern, daß in einem ersten Schneckenabschnitt der Maschine aufgrund der verfahrensbedingt ausgewählten Schneckensteigung und Gehäusegeometrie die hohen Scherkräfte genutzt werden, um die gewünschte physikalische und/oder chemische Stoffwandlung der in die Maschine eingegebenen Ausgangsstoffe herbeizuführen wobei die physikalische und/oder chemische Stoffwandlung der Ausgangsstoffe durch Änderung eines freien Strömungsquerschnitts in einem Bereich des zweiten Maschinenabschnitts variabel ist. Die solchermaßen bearbeiteten, erwärmten und unter einem hohen Druck stehenden Stoffe können sich in einem nachfolgenden Schneckenabschnitt aufgrund der gewählten anderen Schnecken- und Gehäusegeometrie wieder entspannen. Die bei der Entspannung freigegebenen Gase und Dämpfe werden in diesem Maschinenabschnitt aus der Maschine abgeführt, so daß die in der Maschine verbleibenden Stoffe nunmehr eine schon deutlich verringerte Feuchtigkeit aufweisen. Im Anschluß an diese Expansions- und Entspannungszone werden die in der Maschine befindlichen Stoffe über die Schnecke weiter in Richtung des Maschinenausgangs gegen einen Ausgangswiderstand gefördert, wodurch die zuvor entspannten Stoffe erneut verdichtet werden. Aufgrund der reduzierten Feuchtigkeit in den Stoffen bildet sich bei der erneuten Verdichtung kein bedeutender Dampfdruck innerhalb der Stoffe aus, so daß beim Austritt aus der Maschine keine die Porosität und Schüttdichte signifidant beeinflussende Expansion auftritt. Nach dem Verlassen der Produkte aus der Maschine ist es lediglich notwendig, diese zu kühlen, wie dies aber auch bei dem aus dem Stand der Technik bekannten Verfahren notwendig ist.

Aufgrund der internen Entspannung unter gleichzeitiger Abführung der austretenden Gase und Dämpfe ist es mit diesem Verfahren möglich, ein Zwischenprodukt oder Mischfutterfertigprodukt für Tiere herzustellen, dessen Endfeuchtigkeit unterhalb der maximal zulässigen Feuchtigkeit liegt, so daß ein nachträgliches kostenintensives Trocknen entfallen kann. Durch die erneute Verdichtung der Stoffe nach der internen Entspannungsphase wird darüber hinaus ein Zwischenprodukt oder Mischfutterfertigprodukt für Tiere mit einer hohen Schüttdichte erreicht, so daß insoweit mit diesem Verfahren auch die Nachteile des üblichen Expander-Verfahrens ausgeräumt werden können.

Gemäß einer weiteren Ausführungsform der Erfindung wird vorgeschlagen, daß während mindestens einem der Verfahrensschritte a) bis d) von außen Zusatzstoffe, insbesondere flüssige Komponenten, zu den in der Maschine befindlichen Stoffen hinzu gegeben werden. Eine solche Zugabe von Stoffen während des Verarbeitungsprozesses kann erforderlich sein, um beispielsweise die an das Endprodukt hinsichtlich der stofflichen Veränderungen, Härte, Abriebfestigkeit, Schüttdichte oder dergleichen gestellten Anforderungen bei den unterschiedlichsten Ausgangsstoffen zu erzielen.

Gemäß einer weiteren Ausführungsform des erfindungsgemäßen Verfahrens wird vorgeschlagen, daß der Maschine zumindest abschnittsweise von außen Wärme zugeführt wird. Eine solche externe Wärmezufuhr ist insbesondere dann notwendig, wenn die aufgrund der Energiedissipation erhaltene Wärme in der Maschine nicht ausreicht, um die gewünschte chemische und/oder physikalische Stoffwandlung, insbesondere die Gelatinierung der Stoffe sowie Modifikation der Stärke und des Proteins, zu bewirken.

Gemäß einer besonders energiesparenden und somit kostengünstigen Betriebsweise des erfindungsgemäßen Verfahrens wird vorgeschlagen, daß die im Verfahrensschritt c) aus der Maschine abgeführten Gase und/oder Dämpfe einer Abwärmenutzung zugeführt werden, z. B. teilweise zum Vorkonditionieren der Ausgangsstoffe vor dem Verfahrensschritt a) und/oder zumindest teilweise zur abschnittweisen äußeren Wärmezufuhr. Durch diese Wärmerückgewinnung kann ein Teil der zum Vorkonditionieren der Ausgangsstoffe und/oder zum Erwärmen der Maschine von außen notwendigen Wärme durch die aus dem Herstellungsprozeß abgeführte Wärme bereitgestellt werden.

Gemäß einer ersten Ausführungsform des erfindungsgemäßen Verfahrens wird als Ausgangswiderstand gegen den im Verfahrensschritt d) die in der Maschine befindlichen Stoffe erneut verdichtet werden, eine mit Durchgangsbohrungen versehene Matrize verwendet. Solche Matrizen werden insbesondere zur Herstellung von zylindrischen Futtermittel-Pellets eingesetzt.

Gemäß einer zweiten Ausführungsform der Erfindung wird vorgeschlagen, daß als Ausgangswiderstand ein einen Spalt, insbesondere Ringspalt oder geraden Spalt, bildender Einsatz verwendet wird. Diese Einsätze kommen insbesondere zum Einsatz, wenn Futtermittel nicht mit einer definierten geometrischen Form, beispielsweise als Granulat, hergestellt wird.

Schließlich wird mit der Erfindung vorgeschlagen, daß die die Maschine verlassenden Produkte hinter dem Ausgangswiderstand mittels einer Schneidvorrichtung abgetrennt werden. Diese Schneidvorrichtung kann beispielsweise in der Form rotierender Messer zum Herstellen der Futtermittel-Pellets oder in der Form von Walzen zum Strukturieren des Futtermittel-Granulats ausgebildet sein.

Zur Durchführung des erfindungsgemäßen Verfahrens wird gemäß der vorrichtungsmäßigen **Lösung** der Aufgabenstellung eine Maschine mit einem oder mehreren getrennten Maschinengehäusen, mindestens einer im jeweiligen Maschinengehäuse drehbar gelagerten Schneckenwelle, einem Stoffwandlungs- und Verdichtungsabschnitt, in dem eine Stoffwandlung und eine erste Verdichtung von Ausgangsstoffen stattfindet, und einem Entspannungsabschnitt vorgeschlagen, bei der im Entspannungsabschnitt mindestens eine Entgasungsöffnung im Gehäuse der Maschine vorgesehen ist.

Die Maschine ist so aufgebaut, daß der freie Strömungsquerschnitt zwischen der Gehäuseinnenwand und dem Kerndurchmesser der Schneckenwelle in zumindest dem Stoffwandlungs- und Verdichtungsabschnitt der Maschine durch zumindest eine Verengung reduzierbar ist.

Da es sich in praktischen Versuchen herausgestellt hat, daß die physikalischen und/oder chemischen Stoffwandlungen der Ausgangsstoffe nicht allein durch die hydrothermischen Bedingungen in einem Extruder erzielt werden, sondern vielmehr die Erzeugung hoher Scherkräfte notwendig ist, um die gewünschte Stoffwandlung der Ausgangsstoffe zu erreichen, ist bei der erfindungsgemäßen Vorrichtung der freie Strömungsquerschnitt in zumindest einem Teilbereich der Maschine reduzierbar ausgebildet. Im Bereich dieses reduzierten freien Strömungsquerschnittes werden entlang der Wegstrecke der Verengung Stoffrezirkulationen und hohe Scherkräfte erzeugt, die die gewünschte physikalische und/oder chemische Stoffwandlung der Ausgangsstoffe aufgrund der Scherbeanspruchung und Energiedissipation bewirken. Insbesondere bei Maschinen mit nur einer Schneckenwelle hat sich die Ausbildung einer solchen Verengung in einem Maschinenabschnitt als äußerst günstig erwiesen.

Das Maß der mindestens einen Verengung ist variabel einstellbar. Durch diese Einstellbarkeit der Verengung kann der Zusammensetzung der Ausgangsstoffe Rechnung getragen, eine Einstellung des Stoffwandlungsgrades erzielt und das Anfahrverhalten der Maschine vorteilhaft beeinflußt werden.

Da bei dem erfindungsgemäßen Verfahren die in die Maschine aufgegebenen und vorkonditionierten Ausgangsstoffe in einem ersten Maschinenabschnitt aufgrund von Scherbeanspruchungen und Energiedissipation einer physikalischen und/oder chemischen Stoffwandlung unterzogen werden sollen, ist die Verengung des freien Strömungsquerschnittes in eben diesem Maschinenabschnitt, in dem die Stoffwandlung und erste Verdichtung der Ausgangsstoffe stattfindet, ausgebildet. Vorzugsweise ist die Verengung am Ende dieses Maschinenabschnittes ausgebildet, so daß vor dem Übergang in den nachfolgenden Abschnitt der Maschine aufgrund der im Verengungsbereich erzeugten hohen Scherkräfte die Stoffwandlung der Ausgangsstoffe stattfindet.

Gemäß einer ersten praktischen Ausführungsform der Erfindung ist die mindestens eine Verengung an der Gehäuseinnenwand, also am Stator ausgebildet. Eine solche gehäuseseitige Verengung kann beispielsweise durch eine in das Maschinengehäuse eingesetzte Blende erzielt werden, die den freien Strömungsquerschnitt reduziert und deren Durchlaßöffnung vorzugsweise variabel einstellbar ausgestaltet ist.

Gemäß einer alternativen Ausführungsform der gehäuseseitigen Ausbildung der Verengung wird vorgeschlagen, daß die Verengung als mechanisch, elektrisch, pneumatisch oder hydraulisch verstellbarer Kolbenring ausgebildet ist. Das Verstellen dieses einen Teil der Gehäuseinnenwand bildenden Kolbenrings bewirkt dabei eine gleichmäßige Verringerung des freien Strömungsquerschnitts zwischen Gehäuseinnenwand und Kerndurchmesser der Schneckenwelle.

Mit einer zweiten prinzipiellen Ausführungsform der erfindungsgemäßen Vorrichtung wird vorgeschlagen, die mindestens eine Verengung an der Schneckenwelle, also am Rotor auszubilden.

Eine solche Verengung der Schneckenwelle kann beispielsweise durch einen mechanisch, elektrisch, pneumatisch oder hydraulisch verstellbaren Kolbenring bewirkt werden. Dieser auf der Schneckenwelle angeordnete Kolbenring wird dabei bei der Betätigung auseinandergedrückt, so daß dadurch der freie Strömungsquerschnitt zwischen der Gehäuseinnenwand und dem Kerndurchmesser der Schneckenwelle im Bereich des Kolbenrings reduziert wird.

Schließlich wird mit der Erfindung vorgeschlagen, daß das Verhältnis des im Bereich der mindestens einen Verengung verbleibenden freien Strömungsquerschnitts zur axialen Länge der Verengung an die jeweiligen Eigenschaften der zu bearbeitenden Ausgangsstoffe, den jeweils gewünschten Stoffwandlungsgrad der Ausgangsstoffe und/oder die Betriebsbedingungen anpaßbar ist. Da das Maß der erzeugten Scherkräfte einerseits vom freien Strömungsquerschnitt abhängig ist andererseits aber auch maßgeblich von der Wegstrecke der Verengung beeinflußt wird, läßt sich durch das Einstellen des Verhältnisses Durchmesser/Wegstrecke der Stoffwandlungsgrad der Ausgangsstoffe in Abhängigkeit von der Zusammensetzung und den Eigenschaften der Ausgangsstoffe beeinflussen.

Weitere Merkmale und Vorteile der Erfindung ergeben sich aus der nachfolgenden Beschreibung der zugehörigen Zeichnung, in der schematisch drei Ausführungsformen einer eine Schnecke aufweisenden Maschine mit einem Gehäuse zur Durchführung des erfindungsgemäßen Verfahrens dargestellt sind. In der Zeichnung zeigt:
- Fig. 1: eine schematische Seitenansicht einer erfindungsgemäßen Vorrichtung gemäß einer ersten Ausführungsform;
- Fig. 2: eine vergrößerte Ansicht des Details II gemäß Fig. 1 gemäß einer zweiten Ausführungsform und
- Fig. 3: eine vergrößerte Ansicht des Details III gemäß Fig. 1 gemäß einer dritten Ausführungsform.

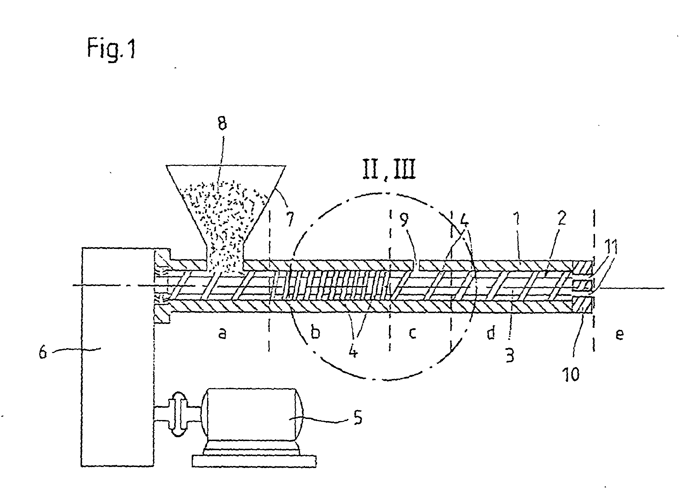

Die in den Ausführungsbeispielen gemäß Fig. 1 bis 3 dargestellten Maschinen zur Durchführung des Verfahrens zur Herstellung von Zwischenprodukten und Mischfutterfertigprodukten für Tiere weisen eine in einem Gehäuse 1 drehbar gelagerte Schnecke 2 auf. Die Schnecke 2 besteht aus einer Schneckenwelle 3, auf deren Umfangsfläche Schneckengewinde 4 unterschiedlicher Steigung angeordnet sind.

Die Schneckenwelle 3 kann mittels eines Motors 5 und beispielsweise einem zwischengeschaltetem Getriebe 6 mit verschiedenen Drehzahlen und sowohl im Vorwärts- als auch im Rückwärtslauf angetrieben werden.

Das mit diesen Maschinen durchzuführende Verfahren zur Herstellung von Zwischenprodukten und Mischfutterfertigprodukten für Tiere läuft wie folgt ab:

Im mit a) gekennzeichneten ersten Verfahrensschritt werden der Maschine über einen Aufgabetrichter 7 die zu verarbeitenden vorkonditionierten Ausgangsstoffe 8 aufgegeben. Das Vorkonditionieren der Ausgangsstoffe 8 erfolgt mittels Sattdampf, wobei den Ausgangsstoffen 8 mittels dieses Sattdampfes einerseits Feuchtigkeit und andererseits Wärme zugeführt wird.

Im Bereich des Verfahrensschrittes a) ist die Schneckengeometrie, d. h. die Steigung des auf der Schneckenwelle 3 angeordneten Schneckengewindes 4 relativ flach ausgebildet, so daß in diesem Bereich nahezu ausschließlich ein Transport der in die Maschine aufgegebenen Ausgangsstoffe 8 hin zum Ausgang der Maschine erfolgt. Im mit b) gekennzeichneten zweiten Verfahrensschritt ist das Schneckengewinde 4 sehr viel steiler ausgebildet als im vorhergehenden Verfahrensschritt a), so daß neben dem Transport der in der Maschine befindlichen Stoffe eine starke Scherbeanspruchung der Stoffe erfolgt. Aufgrund der hohen Scherbeanspruchung der in der Maschine befindlichen Stoffe im Verfahrensschritt b) wird durch Energiedissipation die über die Schneckenwelle 3 eingebrachte mechanische Energie in Wärme umgewandelt, so daß eine weitere Temperaturerhöhung der zu bearbeitenden Stoffe stattfindet. Die Temperaturerhöhung der in der Maschine befindlichen Stoffe im Verfahrensschritt b) führt zu einer Gelatinierung der Stoffe, d. h. daß diese Stoffe ein pastöses Fließverhalten aufweisen. Die Temperaturerhöhung der in der Maschine befindlichen Stoffe auf in der Regel über 100°C ist darüber hinaus bei der Herstellung von Zwischenprodukten und Mischfutterfertigprodukten für Tiere wichtig, um eine physikalische und/oder chemische Stoffwandlung innerhalb der zu verarbeitenden Stoffe zu bewirken. Diese Stoffwandlung betrifft beispielsweise den Aufschlußgrad der Stärke (Gelatinierung), die Spaltung von Proteinen zur Bildung denaturierter Proteine und hierbei beispielsweise pansenstabiler Proteine sowie die Inaktivierung antinutritiver Substanzen und die Verbesserung des Hygiene-Status des Futters.

Die während der Vorkonditionierung in die Ausgangsstoffe 8 eingebrachte hohe Feuchtigkeit führt zusammen mit der starken Erwärmung der Stoffe im Verfahrensschritt b) dazu, daß sich innerhalb der Stoffe ein hoher Dampfdruck aufbaut. Im Übergang vom Verfahrensschritt b) zum mit c) gekennzeichneten dritten Verfahrensschritt ändert sich die Steigung des Schneckengewindes wieder hin zu einem flacheren Gewinde. Dieses flache Gewinde ermöglicht es den im Verfahrensschritt b) mechanisch stark beanspruchten und verdichteten Stoffen sich wieder zu entspannen. Der im Verfahrensschritt b) aufgebaute hohe Druck wird beim Übergang zum Verfahrensschritt c) schlagartig abgebaut. Zum Abführen der bei dieser Entspannung und Expansion austretenden Gase und/oder Dämpfe ist im Bereich des Verfahrensschrittes c) im Gehäuse 1 der Maschine wenigstens eine Entgasungsöffnung 9 vorgesehen, über die die Gase und/oder Dämpfe abgeführt werden können. Zur Energierückgewinnung können diese über die Entgasungsöffnung 9 abgeführten Gase und/oder Dämpfe beispielsweise zum Vorkonditionieren der Ausgangsstoffe 8 und/oder zum Beheizen des Gehäuses 1 verwendet werden, wenn dies gewünscht wird und thermodynamisch möglich ist.

Die Steigung des Schneckengewindes 4 im Verfahrensschritt c) sowie im sich daran anschließenden, mit d) gekennzeichneten vierten Verfahrensschritt ist so ausgelegt, daß in diesen Verfahrensschritten wiederum hauptsächlich ein Transport der in der Maschine befindlichen Stoffe hin zum Ausgang der Maschine erfolgt. Am Ende der Schneckenwelle 3 ist das Gehäuse 1 durch einen Ausgangswiderstand 10 verschlossen. Im dargestellten Ausführungsbeispiel ist der Ausgangswiderstand 10 als mit Durchgangsbohrungen 11 versehene Matrize ausgebildet. Da dieser Ausgangswiderstand 10 den Ausgangsdurchmesser des Gehäuses 1 deutlich verringert, werden im Verfahrensschritt d) die über die Schnecke hin zum Ausgang der Maschine geförderten Stoffe nach der Entspannung im Verfahrensschritt c) erneut verdichtet, bevor sie durch die Durchgangsbohrungen 11 des Ausgangswiderstandes 10 aus der Maschine herausgedrückt werden. Aufgrund der Gelatinierung der Stoffe im Verfahrensschritt b) weisen die Stoffe eine noch ausreichende Fließfähigkeit auf, so daß diese aufgrund des Ausgangswiderstandes 10 zwar erneut verdichtet werden, aber dennoch eine ausreichende Fließfähigkeit zum Durchtreten durch die Durchgangsbohrungen 11 des Ausgangswiderstandes 10 aufweisen. Neben den dargestellten Durchgangsbohrungen 11 können auch beliebige andere geometrische Formen in der Ausgangswiderstands-Matrize ausgebildet sein.

Im mit e) gekennzeichneten fünften Verfahrensschritt werden die aus der Maschine austretenden Zwischenprodukte und Mischfutterfertigprodukte für Tiere beispielsweise in einem Luftstrom gekühlt. Hinter dem Ausgangswiderstand 10 kann eine - nicht dargestellte - Schneidvorrichtung angeordnet sein, um die Zwischenprodukte und Mischfutterfertigprodukte für Tiere auf eine gewünschte geometrische Form abzulängen oder aber in Walzenspalten zu strukturiertem Granulat zu verarbeiten.

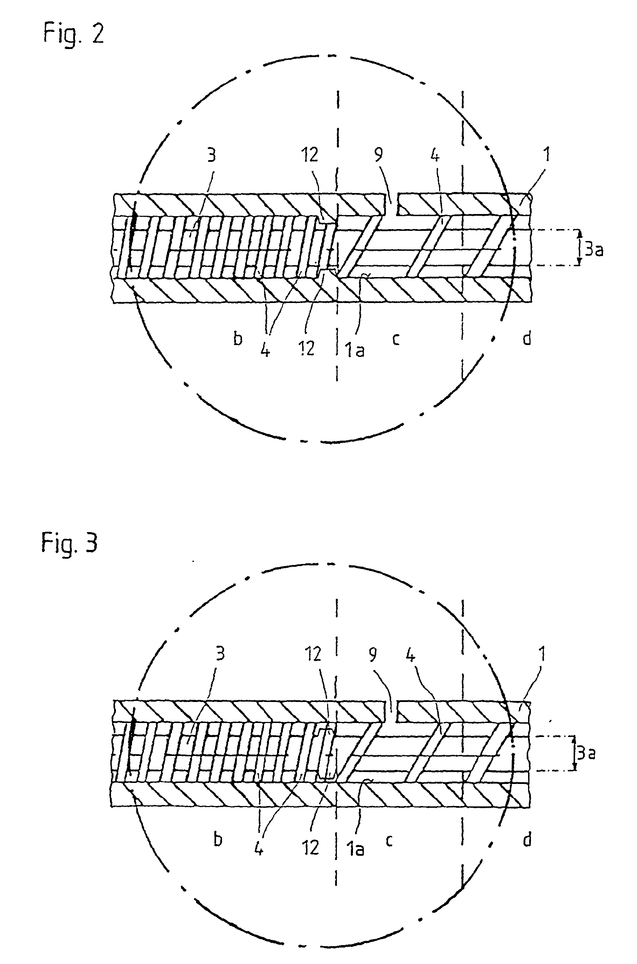

Während die Ausführungsform der Maschine gemäß Fig. 1 in der Regel verwendet wird, wenn die Maschine mit zwei parallel zueinander angeordneten Schneckenwellen 3 versehen ist, werden die in den Abbildungen Fig. 2 und 3 nur ausschnittweise dargestellten Ausführungsformen der Maschine insbesondere für Maschinen verwendet, die mit nur einer Schneckenwelle 3 arbeiten.

Da die im mit b) gekennzeichneten zweiten Verfahrensschritt stattfindende physikalische und/oder chemische Stoffwandlung der Ausgangsstoffe 8 nicht allein durch hydrothermische Prozesse erfolgt, sondern insbesondere durch hohe Scherkräfte und die damit verbundene Energiedissipation bewirkt wird, ist bei den Ausführungsbeispielen gemäß Fig. 2 und 3 am Ende des mit b) gekennzeichneten zweiten Verfahrensschritt in dem die Stoffwandlung stattfindet und die Ausgangsstoffe 8 einer ersten Verdichtung unterzogen werden, eine Verengung 12 der freien Querschnittsfläche zwischen der Gehäuseinnenwand 1a und dem Kerndurchmesser 3a der Schneckenwelle ausgebildet.

Durch die Verengung des freien Strömungsquerschnitts werden einerseits die Ausgangsstoffe weiter verdichtet und andererseits die auf die Ausgangsstoffe 8 wirkenden Scherkräfte deutlich erhöht. Die damit einhergehende Energiedissipation trägt wesentlich zu der gewünschten physikalischen und/oder chemischen Stoffwandlung der Ausgangsstoffe 8 bei.

Das Maß des Stoffwandlungsgrades im Bereich der Verengung 12 ist abhängig vom Verhältnis des freien Strömungsquerschnitts zwischen Gehäuseinnenwand 1a und Kerndurchmesser 3a der Schneckenwelle 3 im Bereich der Verengung 12 und der Weglänge der Verengung 12, d. h. der Strecke, entlang der aufgrund der Verengung 12 hohe Scherkräfte auf die Ausgangsstoffe 8 ausgeübt werden. Je nach Art und Zusammensetzung der Ausgangsstoffe 8 sowie des gewünschten Stoffwandlungsgrades kann dieses Verhältnis zwischen Strömungsquerschnitt und Weglänge der Verengung 12 eingestellt werden.

In den Abbildungen Fig. 2 und 3 sind zwei Möglichkeiten dargestellt, wie eine solche Verengung 12 ausgebildet sein kann. Gemäß Fig. 2 ist die Verengung 12 gehäuseseitig, also am Stator ausgebildet. Im dargestellten Ausführungsbeispiel ist die Verengung 12 als starre Verringerung des Querschnitts ausgebildet.

Neben dieser Art der Ausbildung der Verengung 12 kann die gehäuseseitige Verengung 12 auch beispielsweise als in das Gehäuse eingesetzte Blende oder als in die Gehäuseinnenwand 1a eingesetzter steuerbarer Kolbenring ausgebildet sein. Bei der Verwendung der Blende oder des Kolbenrings läßt sich der jeweils zur Verfügung stehende freie Strömungsquerschnitt variabel einstellen. Unabhängig von der Zusammensetzung der Ausgangsstoffe 8 kann eine Variation des freien Strömungsquerschnitts auch für verschiedene Betriebszustände der Maschine, beispielsweise in der Anfahrphase oder unter Vollast vorteilhaft sein.

Fig. 3 zeigt eine zweite prinzipielle Ausführungsform, wie die Verengung 12 ausgebildet sein kann. Bei dieser Ausführungsform ist die Verengung 12 an der Schneckenwelle 3, also am Rotor der Maschine ausgebildet. Während die dargestellte Verengung 12 wiederum als starre Verengung 12 dargestellt ist, ist es auch im Fall der wellenseitigen Verengung 12 möglich, diese beispielsweise mit einem auf der Schneckenwelle 3 angeordneten Kolbenring so auszugestalten, daß der verbleibende Strömungsquerschnitt variabel einstellbar ist.

Neben der Anordnung nur einer Verengung 12 im Bereich des mit b) gekennzeichneten zweiten Verfahrensschrittes ist es selbstverständlich auch möglich, mehrere Verengungen 12 in ein und demselben Verfahrensschritt oder in unterschiedlichen Verfahrensschritten anzuordnen, wenn dies die Betriebsbedingungen erforderlich machen.

Dieses Verfahren zur Herstellung von Zwischenprodukten und Mischfutterfertigprodukten für Tiere zeichnet sich dadurch aus, daß im Verfahrensschritt b) aufgrund der hohen mechanischen Scherbeanspruchung der in der Maschine befindlichen Stoffe diese einer physikalischen und/oder chemischen Stoffwandlung unterzogen werden die es ermöglicht, die gewünschten Produkteigenschaften, insbesondere für die Stärke- und Proteinfraktionen und dergleichen herbeizuführen. Im daran anschließenden Verfahrensschritt c) können sich die im Verfahrensschritt b) stark erwärmten und verdichteten Stoffe entspannen. Während dieser Entspannung im Verfahrensschritt c) wird der zuvor aufgebaute hohe Dampfdruck innerhalb der Stoffe abgebaut und der Dampf aus der Maschine abgeführt, was zu einer Trocknung der Stoffe führt, die es überflüssig macht, daß die Zwischenprodukte und Mischfutterfertigprodukte für Tiere am Ende des Verfahrens nachträglich getrocknet werden müssen. Um wieder eine gewünschte hohe Schüttdichte der Produkte zu erreichen, werden im sich an den Entspannungsabschnitt anschließenden Verfahrensschritt d) die Stoffe gegen einen Ausgangswiderstand 10 erneut verdichtet, so daß die die Maschine verlassenden Produkte neben der gewünschten Feuchtigkeit von weniger als 15% auch eine ausreichend hohe Schüttdichte aufweisen.

### Bezugszeichenliste

- 1: Gehäuse
- 1a: Gehäuseinnenwand
- 2: Schnecke
- 3: Schneckenwelle
- 3a: Kerndurchmesser
- 4: Schneckengewinde
- 5: Motor
- 6: Getriebe
- 7: Aufgabetrichter
- 8: Ausgangsstoffe
- 9: Entgasungsöffnung
- 10: Ausgangswiderstand
- 11: Durchgangsbohrung
- 12: Verengung

- a): 1. Verfahrensschritt
- b): 2. Verfahrensschritt
- c): 3. Verfahrensschritt
- d): 4. Verfahrensschritt
- e): 5. Verfahrensschritt

## Patentansprüche

1. Verfahren zur Herstellung von Zwischenprodukten und Mischfutterfertigprodukten für Tiere mittels einer mindestens eine zum Transportieren, intensiven Scheren, Erwärmen, Stoffwandeln und Verdichten von Ausgangsstoffen (8) dienenden Schnecke (2) aufweisenden Maschine,
**gekennzeichnet durch**
die aufeinander folgenden Verfahrensschritte:
a) Aufgeben der mittels Sattdampf vorkonditionierten Ausgangsstoffe (8) und deren Förderung in einem ersten Maschinenabschnitt,
b) physikalische und/oder chemische Stoffwandlung der Ausgangsstoffe (8) aufgrund der Scherbeanspruchung, Energiedissipation und Verdichtung in einem zweiten Maschinenabschnitt, wobei die physikalische und/oder chemische Stoffwandlung der Ausgangsstoffe durch Änderung eines freien Strömungsquerschnitts in einem Bereich des zweiten Maschinenabschnitts variabel ist,
c) Entspannen der im Verfahrensschritt b) bearbeiteten Stoffe bei gleichzeitiger Abführung von Gasen und/oder Dämpfen aus der Maschine in einem dritten Maschinenabschnitt,
d) Fördern und erneutes Verdichten der in den vorhergehenden Verfahrensschritten bearbeiteten Stoffe gegen einen Ausgangswiderstand (10) in einem dem Verfahrensschritt c) nachfolgenden Maschinenabschnitt und
e) Abkühlen der hinter dem Ausgangswiderstand (10) aus der Maschine austretenden Produkte.

2. Verfahren nach Anspruch 1, **dadurch gekennzeichnet, daß** während mindestens einem der Verfahrensschritte a) bis d) von außen Zusatzstoffe, insbesondere flüssige Komponenten, zu den in der Maschine befindlichen Stoffen hinzugegeben werden.

3. Verfahren nach Anspruch 1 oder 2, **dadurch gekennzeichnet, daß** der Maschine zumindest abschnittweise von außen Wärme zugeführt wird.

4. Verfahren nach mindestens einem der Ansprüche 1 bis 3, **dadurch gekennzeichnet, daß** die im Verfahrensschritt c) aus der Maschine abgeführten Gase und/oder Dämpfe zumindest teilweise zum Vorkonditionieren der Ausgangsstoffe (8) vor dem Verfahrensschritt a) verwendet werden.

5. Verfahren nach Anspruch 3 oder 4, **dadurch gekennzeichnet, daß** die im Verfahrensschritt c) aus der Maschine abgeführten Gase und/oder Dämpfe zumindest teilweise verwendet werden, um der Maschine von außen Wärme zuzuführen.

6. Verfahren nach mindestens einem der Ansprüche 1 bis 5, **dadurch gekennzeichnet, daß** als Ausgangswiderstand (10) eine Matrize zur Formgebung der herzustellenden Produkte verwendet wird.

7. Verfahren nach mindestens einem der Ansprüche 1 bis 6, **dadurch gekennzeichnet, daß** als Ausgangswiderstand (10) eine mit Durchgangsbohrungen (11) versehene Matrize verwendet wird.

8. Verfahren nach mindestens einem der Ansprüche 1 bis 6, **dadurch gekennzeichnet, daß** als Ausgangswiderstand (10) ein einen Spalt, insbesondere Ringspalt oder geraden Spalt, bildender Einsatz verwendet wird.

9. Verfahren nach mindestens einem der Ansprüche 1 bis 8, **dadurch gekennzeichnet, daß** die die Maschine verlassenden Produkte hinter dem Ausgangswiderstand (10) mittels einer Schneidvorrichtung abgelängt werden.

10. Verfahren nach mindestens einem der Ansprüche 1 bis 8, **dadurch gekennzeichnet, daß** die die Maschine verlassenden Produkte hinter dem Ausgangswiderstand (10) mittels einer nachfolgenden, mindestens ein Walzenpaar aufweisenden Maschine strukturiert werden.

11. Vorrichtung zur Durchführung des Verfahrens nach mindestens einem der Ansprüche 1 bis 10 mit einem oder mehreren Maschinengehäusen (1), mindestens einer in einem Maschinengehäuse (1) drehbar gelagerten Schneckenwelle (3), einem Stoffwandlungs- und Verdichtungsabschnitt, in dem eine Stoffwandlung und eine erste Verdichtung von Ausgangsstoffen (8) stattfindet, und einem Entspannungsabschnitt,
**dadurch gekennzeichnet,**
**daß** der freie Strömungsquerschnitt zwischen einer Gehäuseinnenwand (1a) des Maschinengehäuses (1) und einem Kerndurchmesser (3a) der Schneckenwelle (3) in zumindest dem Stoffwandlungs- und Verdichtungsabschnitt der Maschine durch zumindest eine Verengung (12) reduzierbar ist, wobei das Maß der den freien Strömungsquerschnitt reduzierenden Verengung (12) variabel einstellbar ist, und daß in dem Entspannungsabschnitt der Maschine, in dem die bearbeitenden Stoffe entspannt werden, mindestens eine Entgasungsöffnung (9) im Gehäuse (1) der Maschine vorgesehen ist.

12. Vorrichtung nach Anspruch 11, **dadurch gekennzeichnet, daß** die Verengung (12) am Ende des Stoffwandlungs- und Verdichtungsabschnittes ausgebildet ist.

13. Vorrichtung nach mindestens einem der Ansprüche 11 oder 12, **dadurch gekennzeichnet, daß** die mindestens eine Verengung (12) an der Gehäuseinnenwand (1 a) ausgebildet ist.

14. Vorrichtung nach Anspruch 13, **dadurch gekennzeichnet, daß** die Verengung (12) als in das Maschinengehäuse (1) eingesetzte Blende ausgebildet ist.

15. Vorrichtung nach Anspruch 13, **dadurch gekennzeichnet, daß** die Verengung (12) als mechanisch, elektrisch, pneumatisch oder hydraulisch verstellbarer Kolbenring ausgebildet ist.

16. Vorrichtung nach mindestens einem der Ansprüche 11 oder 12, **dadurch gekennzeichnet, daß** die mindestens eine Verengung (12) an der Schneckenwelle (3) ausgebildet ist.

17. Vorrichtung nach Anspruch 16, **dadurch gekennzeichnet, daß** die Verengung (12) als mechanisch, elektrisch, pneumatisch oder hydraulisch verstellbarer Kolbenring ausgebildet ist.

18. Vorrichtung nach mindestens einem der Ansprüche 11 bis 17, **dadurch gekennzeichnet, daß** das Verhältnis des im Bereich der mindestens einen Verengung (12) verbleibenden freien Strömungsquerschnitts zur axialen Länge der Verengung (12) an die jeweiligen Eigenschaften der zu bearbeitenden Ausgangsstoffe (8), den jeweils gewünschten Stoffwandlungsgrad der Ausgangsstoffe (8) und/oder die Betriebsbedingungen anpaßbar ist.

## Claims

1. A method of manufacturing intermediate products and mixed fodder products for animals by means at least one machine having a screw conveyor (2) for transporting, intensively shearing, heating, material conversion and compression of starting materials (8) **characterised by** the following successive method steps:
a) supplying starting materials (8) preconditioned by means of saturated steam and conveying them in a first machine section,
b) physical and/or chemical material conversion of the starting materials (8) by virtue of shear stressing, energy dissipation and compression in a second machine section, the physical and/or chemical material conversion of the starting materials being variable by altering a free flow cross-section in a region of the second machine section,
c) stress relieving the materials processed in method step b) with simultaneous exhausting of gases and/or vapours from the machine in a third machine section,
d) conveying and further compressing the materials processed in the preceding method steps against an output resistance (10) in a machine section following method step c) and,
e) cooling the products discharging from the machine after the output resistance (10).

2. A method as claimed in claim 1, **characterised in that** during at least one of the method steps a) to d) additives, particularly liquid components, are added from the exterior to the materials within the machine.

3. A method as claimed in claim 1 or 2, **characterised in that** heat is supplied from the exterior to the machine, at least in sections.

4. A method as claimed in at least one of claims 1 to 3, **characterised in that** the gases and/or vapours exhausted from the machine in method step c) are used, at least in part, for preconditioning the starting materials (8) before method step a).

5. A method as claimed in claim 3 or 4, **characterised in that** the gases and/or vapours exhausted from the machine in method step c) are used, at least in part, in order to supply heat from the exterior to the machine.

6. A method as claimed in at least one of claims 1 to 5, **characterised in that** a matrix for shaping the products to be produced is used as the output resistance (10).

7. A method as claimed in at least one of claims 1 to 6, **characterised in that** a matrix provided with holes (11) passing through it is used as the output resistance (10).

8. A method as claimed in at least one of claims 1 to 6, **characterised in that** an insert defining a gap, particularly an annular gap or a straight gap, is used as the output resistance (10).

9. A method as claimed in at least one of claims 1 to 8, **characterised in that** the products leaving the machine are cut to length after the output resistance (10) by means of a cutting device.

10. A method as claimed in at least one of claims 1 to 8, **characterised in that** the products leaving the machine are structured after the output resistance (10) by means of a downstream machine having at least one pair of rollers.

11. Apparatus for carrying out the method as claimed in at least one of claims 1 to 10 with one or more machine housings (1), at least one screw conveyor shaft (3) rotatably mounted in a machine housing (1), a material conversion and compression section, in which a material conversion and a first compression of starting materials (8) takes place and a stress relieving section, **characterised in that** the free flow cross-section between a housing inner wall (1a) of the machine housing (1) and a core diameter (3a) of the screw conveyor shaft (3) is reducible in at least the material conversion and compression section of the machine by at least one constriction (12), whereby the dimension of the constriction (12) reducing the free flow cross-section is variable, and that provided in the stress relieving section of the machine, in which the stress in the materials to be processed is relieved, there is at least one exhaust gas opening (9) in the housing (1) of the machine.

12. Apparatus claimed in claim 11, **characterised in that** the constriction (12) is formed at the end of the material conversion and compression section.

13. Apparatus claimed in at least one of claims 11 or 12, **characterised in that** the at least one constriction (12) is formed on the housing inner wall (1a).

14. Apparatus claimed in claim 13, **characterised in that** the constriction (12) is constructed as an orifice plate inserted into the machine housing (1).

15. Apparatus claimed in claim 13, **characterised in that** the constriction (12) is constructed in the form of a mechanically, electrically, pneumatically or hydraulically moveable piston ring.

16. Apparatus claimed in at least one of claims 11 or 12, **characterised in that** the at least one constriction (12) is formed on the screw conveyor shaft.

17. Apparatus claimed in claim 16, **characterised in that** the constriction (12) is constructed in the form of a mechanically, electrically, pneumatically or hydraulically moveable piston ring.

18. Apparatus claimed in at least one of claims 11 to 17, **characterised in that** the ratio of the free flow cross-section remaining in the region of the at least one constriction (12) to the axial length of the constriction (12) may be matched to the characteristics of the starting materials (8) to be processed, the desired degree of material conversion of the starting materials (8) and/or the operating conditions.

## Revendications

1. Méthode pour la fabrication de produits intermédiaires et de fourrages mixtes pour animaux au moyen d'une machine comprenant au moins une vis sans fin (2) servant au transport, au cisaillement intensif, au chauffage, à la transformation et au compactage de matières premières (8), **caractérisée en ce qu'**elle comprend les étapes de procédé suivantes :
a) dépôt des matières premières (8) pré-conditionnées avec de la vapeur saturée et transport de celles-ci dans une première partie de la machine,
b) transformation physique et/ou chimique des matières premières (8) sous l'effet de la contrainte de cisaillement, dissipation d'énergie et compactage dans une deuxième partie de la machine, la transformation physique et/ou chimique des matières premières pouvant varier grâce aux variations de la section d'écoulement libre dans une zone de la deuxième partie de machine,
c) décompression des matières traitées dans l'étape de procédé b) avec évacuation simultanée de gaz et/ou de vapeurs hors de la machine dans une troisième partie de machine,
d) transport et nouveau compactage des matières traitées dans les étapes de procédé précédentes contre une grille de résistance de sortie (10) dans une partie de la machine faisant suite à l'étape de procédé c) et
e) refroidissement des produits sortant de la machine en aval de la grille de résistance de sortie (10).

2. Méthode selon la revendication 1, **caractérisée en ce que** pendant l'une au moins des étapes de procédé a) à d), des additifs, en particulier des ingrédients liquides, sont ajoutés depuis l'extérieur aux matières présentes dans la machine.

3. Méthode selon la revendication 1 ou 2, **caractérisée en ce que** de la chaleur est amenée de l'extérieur au moins à certaines parties de la machine.

4. Méthode selon l'une au moins des revendications 1 à 3, **caractérisée en ce que** les gaz et/ou vapeurs extraits de la machine dans l'étape de procédé c) sont utilisés au moins partiellement pour le pré-conditionnement des matières premières (8) avant l'étape de procédé a).

5. Méthode selon la revendication 3 ou 4, **caractérisée en ce que** les gaz et/ou vapeurs extraits de la machine dans l'étape de procédé c) sont utilisés au moins partiellement pour chauffer la machine par l'extérieur.

6. Méthode selon l'une au moins des revendications 1 à 5, **caractérisée en ce que** la grille de résistance de sortie (10) est formée par une matrice pour la mise en forme des produits à fabriquer.

7. Méthode selon l'une au moins des revendications 1 à 6, **caractérisée en ce que** la grille de résistance de sortie (10) est une matrice pourvue de trous traversants (11).

8. Méthode selon l'une au moins des revendications 1 à 6, **caractérisée en ce que** la grille de résistance de sortie (10) est un insert formant une fente, en particulier une fente annulaire ou rectiligne.

9. Méthode selon l'une au moins des revendications 1 à 8, **caractérisée en ce que** les produits sortant de la machine sont recoupés au moyen d'un dispositif de coupe après la grille de résistance de sortie (10).

10. Méthode selon l'une au moins des revendications 1 à 8, **caractérisée en ce que** les produits sortant de la machine sont structurés après la grille de résistance de sortie (10) au moyen d'une machine montée en aval et possédant au moins une paire de rouleaux.

11. Installation pour la mise en oeuvre de la méthode selon l'une au moins des revendications 1 à 10 avec un ou plusieurs boîtiers de machine (1), au moins un arbre de vis sans fin (3) disposé avec possibilité de rotation dans un boîtier de machine (1), une partie de transformation et compactage dans laquelle ont lieu une transformation et un premier compactage des matières premières (8), et une partie de décompression, **caractérisée en ce que** la section d'écoulement libre entre la paroi intérieure (1a) du boîtier de machine (1) et un diamètre d'âme (3a) de l'arbre de vis sans fin (3) peut être réduite au moins dans la partie de transformation et de compactage de la machine par au moins un resserrement (12), la grandeur du resserrement (12) réduisant la section d'écoulement libre étant réglable de façon variable, et **en ce qu'**il est prévu au moins une ouverture de dégazage (9) dans le boîtier (1) dans la partie de décompression de la machine, dans laquelle les matières travaillées sont décompressées.

12. Installation selon la revendication 11, **caractérisée en ce que** le resserrement (12) est formé à l'extrémité d'une partie de transformation et de compactage.

13. Installation selon l'une au moins des revendications 11 ou 12, **caractérisée en ce que** le resserrement (12) au nombre d'un au moins est formé sur la paroi intérieure (1a) du boîtier.

14. Installation selon la revendication 13, **caractérisée en ce que** le resserrement (12) est conçu comme un volet inséré dans le boîtier de machine (1).

15. Installation selon la revendication 13, **caractérisée en ce que** le resserrement (12) est conformé comme un segment de piston à déplacement mécanique, électrique, pneumatique ou hydraulique.

16. Installation selon l'une au moins des revendications 11 ou 12, **caractérisée en ce que** le resserrement (12) au nombre d'un au moins est formé sur l'arbre de vis sans fin (3).

17. Installation selon la revendication 16, **caractérisée en ce que** le resserrement (12) est conformé comme un segment de piston à déplacement mécanique, électrique, pneumatique ou hydraulique.

18. Installation selon au moins l'une des revendications 11 à 17, **caractérisée en ce que** le rapport entre la section restant libre de passage pour le flux au niveau du resserrement (12) au nombre d'un au moins est ajustable aux propriétés respectives des matières premières travaillées, du degré respectif de transformation souhaité des matières premières, et/ou des conditions de fonctionnement.
